# EUROPEAN PATENT SPECIFICATION

(11) **EP 3 677 443 B1**
(45) Date of publication and mention of the grant of the patent: **02.11.2022**
(21) Application number: 19218344.0
(22) Date of filing: 19.12.2019
(51) Int. Cl.: B60C 15/00, B60C 15/05, B60C 15/04

(54) **TIRE WITH A CLAMPED CARCASS PLY**
REIFEN MIT EINGESPANNTER KARKASSENLAGE
PNEUMATIQUE DOTÉ D'UN PLI DE CARCASSE SERRÉ

(30) Priority: 20.12.2018 US 201862782484 P; 17.10.2019 US 201916655289
(43) Date of publication of application: 08.07.2020
(73) Proprietor: The Goodyear Tire & Rubber Company, Akron, OH 44316 (US)
(72) Inventor: REICHLING, Gilles, L-9189 Vichten (LU); BONNET, Gilles, L-9176 Niederfeulen (LU); MULLER, Philippe Joseph Auguste, B-6971 Champlon (BE); DI PRIZIO, Olivier, F-57330 Hettange-Grande (FR); SOULTIS, Nicolas, B-6700 Freylange (BE); LIONETTI, Robert Edward, L-7227 Bereldange (LU); MARECHAL, Frederic, B-6781 Selange (BE); COX, Hubert Anna Johanes, L-9151 Eschdorf (LU); DEHEZ, Germain, B-6674 Gouvy (BE)
(74) Representative: Kutsch, Bernd

(56) References cited:
- EP-A1- 0 751 015
- EP-A1- 1 237 738
- EP-A2- 1 277 600
- WO-A1-00/34059
- WO-A1-02/00455
- US-A1- 2011 143 160

## Description

### Field of the Invention

The invention relates generally to tires and more particularly to a pneumatic tire.

### Background of the Invention

For high performance and ultrahigh performance tires, it is often desired to eliminate the ply turnup around the bead. Eliminating the ply turnup avoids any compression in the ply component during the building process and removes the stress concentration at the ply turnup. In addition, eliminating the ply turnup also improves the ply line in the lower area of the tire. Furthermore, if the bead has no ply turnup, there is increased design flexibility for the tire/rim interface improvement. However, it is difficult to build the tire without building the tire on a solid core. The ply cord typically pulls out from the bead during the tire curing process, because of the rapid expansion of the tire carcass during the cure process. The solid core, when also used during the curing process, eliminates the movement of the carcass. However, building a tire on a solid core requires special equipment and often is a much slower tire building process. Thus, it is desired to provide a tire that has a carcass ply secured between a first and second bead column, i. e. a so-called clamped-ply, which preferably has no ply turnup and which can be manufactured using conventional tire building equipment.

WO 02/00455 A1 describes a tire in accordance with the preamble of claim 1. Such tires are also known from EP 1 237 738 A1 and EP 1 277 600 A2.

### Summary of the Invention

The invention relates to a tire in accordance with claim 1.

Dependent claims refer to preferred embodiments of the invention.

In one aspect of the invention, a tire having no ply turnup is disclosed, the tire comprising a tread, a single layer of ply, a first column bead and a second, flexible or extensible bead, wherein the radially inner end of the single layer of ply is secured between the first column bead and the second flexible bead.

In another aspect of the invention, a tire having a tread is disclosed, the tire having a layer of carcass ply having a radially inner end, a first column bead and a second bead, preferably a second column bead, wherein the radially inner end of the layer of ply is secured between the first column bead and the second bead, wherein the first column bead comprises or consists of a first bead wire and the second bead comprises or consists of a second bead cord, and wherein one of the first and second bead wire or cord has an elongation at 10% of the breaking load greater than 0.2%, when measured from a wire or cord extracted from a cured tire, and the respective other of the first or second bead wire or cord has an elongation at 10% of the breaking load less than 0.2%, when measured from a wire or cord extracted from a cured tire.

In a preferred aspect of the invention, one of the first and second bead wire or cord has an elongation at 10% of the breaking load greater than 0.4% or greater than 0.8% when measured from a wire or cord extracted from a cured tire.

In a preferred aspect of the invention, one of the first or second bead wire or cord has an elongation at 10% of the breaking load less than 0.15% or less than 0.1%, when measured from a wire or cord extracted from a cured tire.

In a preferred aspect of the invention, the tire has only a single layer of carcass ply. In another aspect of the invention, the tire may however also have more than one layer of carcass ply, wherein (i) at least two of these layers of carcass ply are secured between the first column bead and the second bead or column bead; or wherein only a single layer of carcass ply is secured between the first column bead and the second bead or column bead.

In a preferred aspect of the invention, the first column bead is on the axially inner side of the secured layer of carcass ply and the first bead wire or cord has an elongation at 10% of the breaking load less than 0.2%, preferably less than less than 0.15% or less than 0.1%, when measured from a wire or cord extracted from a cured tire, and the second bead or column bead is on the axially outer side of the secured layer of carcass ply and the second bead wire or cord has an elongation at 10% of the breaking load greater than 0.2%, preferably greater than 0.4% or greater than 0.8%, when measured from a wire or cord extracted from a cured tire.

The first column bead comprises or consists of steel wire and/or the second bead or column bead comprises or consists of steel cords, said steel cords comprising a plurality of steel filaments twisted together.

In a preferred aspect of the invention, tire further includes a first, preferably substantially triangular shaped apex located radially outward of the first column bead and/or the tire further includes a second, preferably substantially triangular shaped apex located radially outward of the second bead or column bead.

In a preferred aspect of the invention, the second bead or column bead is on the axially outer side of the secured layer of carcass ply and the second apex has a substantially triangular shaped apex portion and a lip portion extending radially inward from the substantially triangular shaped apex portion. Preferably, the lip portion has an axial width less, more preferably at least 70% or 90% less, than the axial width of the substantially triangular shaped apex portion.

In a preferred aspect of the invention, the lip portion is positioned against the second bead or column bead and/or extends along the second bead or column bead, preferably along the full radial height of the second bead or column bead.

In a preferred aspect of the invention, the first column bead comprises or is formed of a single steel bead wires, preferably with a wire diameter in a range of from 0.89 mm to 1.83 mm.

In a preferred aspect of the invention, the single steel bead wires have a tensile strength in the range of from 2100 to 2500 MPa.

In a preferred aspect of the invention, the single steel bead wires have a minimum percent elongation to break of 5%, preferably of 6%, as tested according to ASTM D4975.

In a preferred aspect of the invention, the second bead or bead column comprises or is formed of steel cords with multiple filaments, the filaments preferably having a diameter in a range of from 0.28 mm to 0.42 mm.

In a preferred aspect of the invention, the second bead or column bead comprises or is formed of steel cords having a tensile strength below 3500 MPa or below 3000 MPa.

In a preferred aspect of the invention, the tire has no carcass ply turning around the tire bead and/or has no carcass ply turnup.

In a preferred aspect of the invention, the radially inner end of the layer of ply that is secured between the first column bead and the second bead or column bead does not extend radially inward beyond the radially innermost point of the first and second bead column.

In a preferred aspect of the invention, the second bead or column bead is formed by spirally winding a cord onto a tire building drum and/or wherein the first bead column is formed by winding a wire onto a tire building drum.

In a preferred aspect of the invention, the second bead or column bead comprises or is formed of steel cords having a total elongation to break greater than 3%, preferably greater than 3.5% or greater than 4%, according to ASTM D2969.

In a preferred aspect of the invention, the second bead or column bead comprises or is formed of steel cords having a total elongation to break less than 5% according to ASTM D2969.

In a preferred aspect of the invention, the ratio of the sum of the tensile strengths of the wires of the first column bead to the sum of the tensile strengths of the cords of the second column bead is in a range of from 0.5 to 1.5 or from 0.8 to 1.2, such as about 1.

In a preferred aspect of the invention, wherein the cross section of the first column bead and/or the second bead or column bead is at least substantially rectangular.

In a preferred aspect of the invention, the first column bead consists of two rows of eight wires in each row; and/or the second column bead consists of two rows of six cords in each row.

In a preferred aspect of the invention, the first column bead consists of 1 to 3 rows of 6 to 12 wires in each row; and/or the second column bead consists of 1 to 3 rows of 4 to 10 cords in each row.

### Definitions

"Axial" and "axially" means lines or directions that are parallel to the axis of rotation of the tire.

"Chafer" is a narrow strip of material placed around the outside of a tire bead to protect the cord plies from wearing and cutting against the rim and distribute the flexing above the rim.

"Circumferential" means lines or directions extending along the perimeter of the surface of the annular tread perpendicular to the axial direction.

"Lateral" means an axial direction.

"Radial" and "radially" means directions radially toward or away from the axis of rotation of the tire.

"Extensible" means a cable, cord, wire or reinforcement having an elongation at 10% of the breaking load greater than 0.2%, when measured from a cord extracted from a cured tire.

### Brief Description of the Drawings

The invention will be described by way of example and with reference to the accompanying drawings in which:
FIG. 1 is a cross-sectional view of a tire with no ply turnup;
FIG. 2 is a schematic of the bead area shown with the inner liner, a first apex and a second apex; and
FIG. 3A is a first embodiment of the second apex, while FIG. 3B is a second embodiment of the second apex.

### Detailed Description of Example Embodiments of the Present Invention

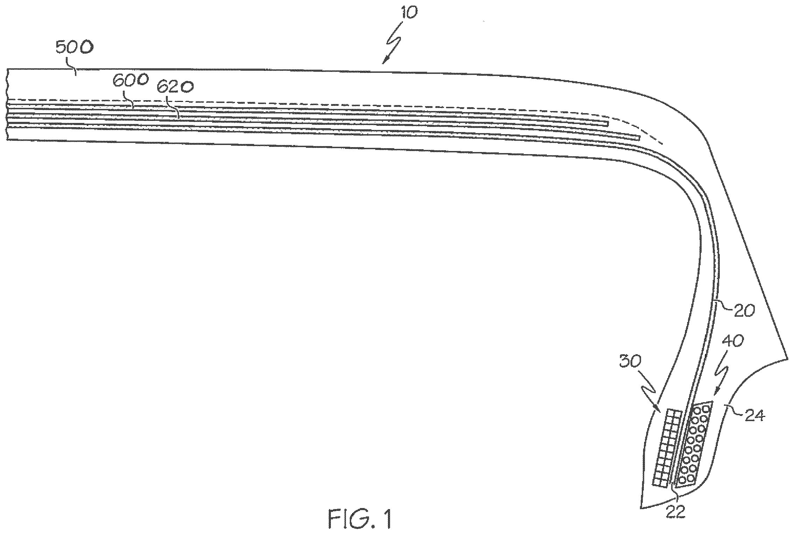

FIG. 1 illustrates a tire 10 of the present invention that has no bead turnup, i.e. no carcass ply turning about the bead and forming a carcass ply turnup portion.

The tire 10 further includes a tread 500, an inner liner 90 and one or more belts 600, 620. The belts 600, 620 may comprise conventional belt configurations known to those skilled in the art.

Preferably, the tire 10 has only a single layer or monolayer of ply 20, that has a radially inner portion 22 that is clamped between a first bead 30 (or bead column) and a second bead 40 (or bead column).

In one embodiment, the ply layer 20 comprises radial cords that may be formed of a high modulus 2200/3 denier cords or 3340/2 denier cords. The cord material may be nylon, aramid, or a hybrid construction of nylon/aramid. The lower ply end 22 is clamped between the first bead 30 and the second bead 40.

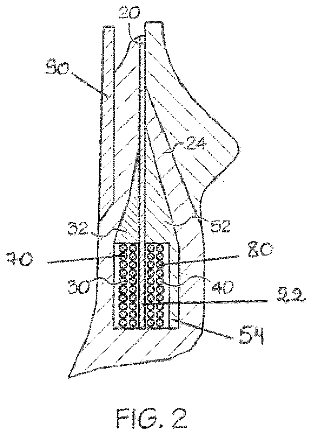

The first bead 30 is a column bead bundle, preferably a double column bead bundle that may range from 2 by 6 to 2 by 13, i.e. 2 rows with 6 to 13 wires 70 in each row. In one embodiment, the first bead 30 is formed of metal or steel wire 70, with a 0.89 mm diameter or a 1.295 mm diameter for instance. The first bead 30 may be pre-formed and then applied onto the tire building drum. An optional first apex 32 as depicted in FIG. 2 may be positioned radially outward of the first bead column 30.

The tire further includes a second or axially outer bead or bead column 40 that functions to clamp the ply ending 22 between the first and second beads 30, 40. Preferably, the axially outer bead 40 is a flexible bead and/or formed of multifilament extensible cord.

Preferably, the second bead 40 is a column bead bundle, more preferably a double column bead bundle that may range from 2 by 6 to 2 by 13, i.e. 2 rows with 6 to 13 cords 80 in each row. In one embodiment, the second bead 40 is formed of extensible steel cords with multiple filaments, the filaments preferably having a diameter in a range of from 0.28 mm to 0.42 mm. An optional second apex 50, 60 as depicted in FIG. 2 may be positioned radially outward of the second bead column 40.

Preferably, the axially outer bead 40 is spirally wound directly onto the ply ending 22 during the tire building process. In a preferred embodiment, the axially outer bead 40 is formed from an extensible cord.

A second apex 50, 60 is located radially outward of the axially outer bead 40. The second apex 50, 60 has a radially outer portion 52, 62 that is preferably triangular and is located between the ply 20 and a chafer 24. The second apex 50, 60 has a radially inner lip 54, 64 that is positioned adjacent the axially outer bead 40. The second apex 50, 60 is preferably formed from a highly stiff material in order to get a stiffness gradient between the bead wire and the chafer compound.

The second apex 50 is preferably mechanically locked to the second bead 40 and the surrounding area, minimizing or eliminating the ply slippage during the tire building process and shaping process.

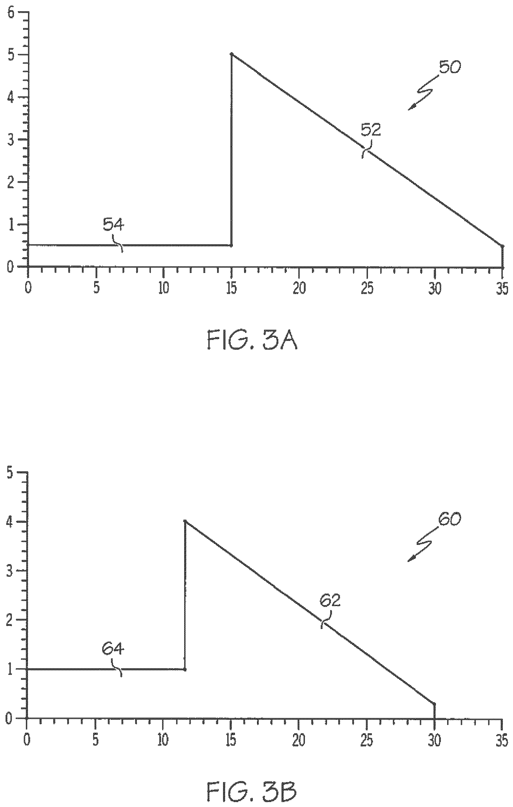

A first embodiment of a second apex 50 is shown in FIG. 2 and FIG. 3A. The radially upper triangular portion 52 width is adapted to the width of the second flexible bead. The narrow lip portion 54 width preferably ranges from 0.3 mm to 0.8 mm. FIG. 3B illustrates a second embodiment of the second apex 60, that has a reduced radial height, and a wider lip in a range of from 0.8 mm to 1.2 mm. Overall, the lip portion 54 preferably has a thickness in a range of from 0.3 to 1.2 mm.

The stiffness may be characterized by the dynamic modulus G', which are sometimes referred to as the "shear storage modulus" or "dynamic modulus," reference may be made to Science and Technology of Rubber, second edition, 1994, Academic Press, San Diego, Calif., edited by James E. Mark et al, pages 249-254. The shear storage modulus (G') values are indicative of rubber compound stiffness which can relate to tire performance. The tan delta value at 100 ºC is considered as being indicative of hysteresis, or heat loss.

In a first embodiment, the second apex 50, 60 comprises a stiff rubber composition having a shear storage modulus G' measured at 1% strain and 100 ºC according to ASTM D5289 ranging from 14 to 43 MPa. In a more preferred embodiment, the second apex 50 comprises a rubber composition having a shear storage modulus G' measured at 1% strain and 100 ºC according to ASTM D5289 ranging from 23 to 43 MPa.

## Claims

1. A tire having a tread, a layer of carcass ply (20) having a radially inner end (22), a first column bead (30) and a second bead or column bead (40), wherein the radially inner end (22) of the layer of ply (20) is secured between the first column bead (30) and the second bead or column bead (40), wherein the first column bead (30) comprises or consists of a first bead wire (70) or cord and the second bead or column bead (40) comprises or consist of a second bead wire (80) or cord, **characterized in that** one of the first and second bead wire or cord (70, 80) has an elongation at 10% of the breaking load greater than 0.2%, when measured from a wire or cord extracted from a cured tire, and the respective other of the first or second bead wire or cord (70, 80) has an elongation at 10% of the breaking load less than 0.2%, when measured from a wire or cord extracted from a cured tire, and **in that** the first column bead (30) comprises or consists of steel wire (70) and the second bead or column bead (40) comprises or consists of steel cords (80) comprising a plurality of steel filaments twisted together.

2. The tire of claim 1 wherein one of the first and second bead wire or cord (70, 80) has an elongation at 10% of the breaking load greater than 0.4% or greater than 0.8% when measured from a wire or cord extracted from a cured tire.

3. The tire of claim 1 or 2 wherein one of the first or second bead wire or cord (70, 80) has an elongation at 10% of the breaking load less than 0.15% or less than 0.1%, when measured from a wire or cord extracted from a cured tire.

4. The tire of at least one of the previous claims wherein the tire (10) has only a single layer of carcass ply (20).

5. The tire of at least one of the previous claims 1 to 3 wherein the tire (10) has more than one layer of carcass ply (20), wherein (i) at least two of these layers of carcass ply (20) are secured between the first column bead (30) and the second bead or column bead (40); or (ii) wherein only a single layer of carcass ply (20) is secured between the first column bead (30) and the second bead or column bead (40).

6. The tire of at least one of the previous claims wherein the first column bead (30) is on the axially inner side of the secured layer of carcass ply (20) and the first bead wire (70) has an elongation at 10% of the breaking load less than 0.2%, preferably less than less than 0.15% or less than 0.1%, when measured from a wire extracted from a cured tire, and wherein the second bead or column bead (40) is on the axially outer side of the secured layer of carcass ply (20) and the second bead cord (80) has an elongation at 10% of the breaking load greater than 0.2%, preferably greater than 0.4% or greater than 0.8%, when measured from a cord extracted from a cured tire.

7. The tire of at least one of the previous claims further including a first, preferably substantially triangular shaped apex (32) located radially outward of the first column bead (30) and/or further including a second, preferably substantially triangular shaped apex (52) located radially outward of the second bead or column bead (40).

8. The tire of at least one of the previous claims wherein the second bead or column bead (40) is on the axially outer side of the secured layer of carcass ply (20) and wherein the second apex (52) has a substantially triangular shaped apex portion (52) and a lip portion (54) extending radially inward from the substantially triangular shaped apex portion (52).

9. The tire of claim 8 wherein the lip portion (54) is positioned against the second bead or column bead (40) and/or extends along the second bead or column bead (40), preferably along the full radial height of the second bead or column bead (40).

10. The tire of at least one of the previous claims wherein the first column bead (30) comprises or is formed of single steel bead wires (70), preferably with a wire diameter in a range of from 0.89 mm to 1.83 mm.

11. The tire of claim 10 wherein the single steel bead wires (70) have a tensile strength in the range of from 2100 to 2500 MPa.

12. The tire of claim 10 or 11 wherein the single steel bead wires (70) have a minimum percent elongation to break of 5%, preferably of 6%, as tested according to ASTM D4975.

13. The tire of at least one of the previous claims wherein the second bead or column bead (40) comprises or is formed of steel cords with multiple filaments, said filaments having a diameter in a range of from 0.28 mm to 0.42 mm.

14. The tire of at least one of the previous claims wherein the second bead or column bead (40) comprises or is formed of steel cords having a tensile strength below 3500 MPa or below 3000 MPa.

## Patentansprüche

1. Reifen, der eine Lauffläche, eine Karkasslageschicht (20), die ein radial inneres Ende (22) aufweist, einen ersten Säulenwulst (30) und einen zweiten Wulst oder Säulenwulst (40) aufweist, wobei das radial innere Ende (22) der Lageschicht (20) zwischen dem ersten Säulenwulst (30) und dem zweiten Wulst oder Säulenwulst (40) befestigt ist, wobei der erste Säulenwulst (30) einen ersten Wulstdraht (70) oder Kord umfasst oder daraus besteht und der zweite Wulst oder Säulenwulst (40) einen zweiten Wulstdraht (80) oder Kord umfasst oder daraus besteht, **dadurch gekennzeichnet, dass** entweder der erste oder der zweite Wulstdraht oder Kord (70, 80) eine Dehnung bei 10 % der Reißlast von über 0,2 % aufweist, wenn diese an einem Draht oder Kord gemessen wird, die aus einem vulkanisierten Reifen entnommenen werden, und der jeweils andere des ersten oder zweiten Wulstdrahts oder Kords (70, 80) eine Dehnung bei 10 % der Reißlast von weniger als 0,2 % aufweist, wenn diese an einem Draht oder Kord gemessen wird, die aus einem vulkanisierten Reifen entnommenen werden, und dadurch, dass der erste Säulenwulst (30) Stahldraht (70) umfasst oder daraus besteht und der zweite Wulst oder Säulenwulst (40) Stahlkorde (80) umfasst oder daraus besteht, die eine Vielzahl von miteinander verdrillten Stahlfilamenten umfassen.

2. Reifen nach Anspruch 1, wobei einer des ersten und zweiten Wulstdrahts oder Kords (70, 80) eine Dehnung bei 10 % der Reißlast von über 0,4 % oder über 0,8 % aufweist, wenn diese an einem Draht oder Kord gemessen wird, die aus einem vulkanisierten Reifen entnommenen werden.

3. Reifen nach Anspruch 1 oder 2, wobei einer des ersten oder der zweiten Wulstdrahts oder Kords (70, 80) eine Dehnung bei 10 % der Reißlast von weniger als 0,15 % oder weniger als 0,1 % aufweist, wenn diese an einem Draht oder Kord gemessen wird, die aus einem vulkanisierten Reifen entnommenen werden.

4. Reifen nach mindestens einem der vorhergehenden Ansprüche, wobei der Reifen (10) nur eine einzige Karkasslageschicht (20) aufweist.

5. Reifen nach mindestens einem der vorhergehenden Ansprüche 1 bis 3, wobei der Reifen (10) mehr als eine Karkasslageschicht (20) aufweist, wobei (i) mindestens zwei dieser Karkasslageschichten (20) zwischen dem ersten Säulenwulst (30) und dem zweiten Wulst oder Säulenwulst (40) befestigt sind; oder (ii) wobei nur eine einzige Karkasslageschicht (20) zwischen dem ersten Säulenwulst (30) und dem zweiten Wulst oder Säulenwulst (40) befestigt ist.

6. Reifen nach mindestens einem der vorhergehenden Ansprüche, wobei der erste Säulenwulst (30) auf der axial inneren Seite der befestigten Karkasslageschicht (20) ist und der erste Wulstdraht (70) eine Dehnung bei 10 % der Reißlast von weniger als 0,2 %, vorzugsweise von weniger als weniger als 0,15 % oder weniger als 0,1 % aufweist, wenn diese an einem Draht oder Kord gemessen wird, die aus einem vulkanisierten Reifen entnommenen werden, und wobei der zweite Wulst oder Säulenwulst (40) auf der axial äußeren Seite der befestigten Karkasslageschicht (20) ist und der zweite Wulstkord (80) eine Dehnung bei 10 % der Reißlast von über 0,2 %, vorzugsweise von über 0,4 % oder von über 0,8 % aufweist, wenn diese an einem Draht oder Kord gemessen wird, die aus einem vulkanisierten Reifen entnommenen werden.

7. Reifen nach mindestens einem der vorhergehenden Ansprüche, ferner einschließlich eines ersten, vorzugsweise im Wesentlichen dreieckig geformten Kernreiters (32), der sich radial nach außen von dem ersten Säulenwulst (30) befindet, und/oder ferner einschließlich eines zweiten, vorzugsweise im Wesentlichen dreieckig geformten Kernreiters (52), der sich radial nach außen von dem zweiten Wulst oder Säulenwulst (40) befindet.

8. Reifen nach mindestens einem der vorhergehenden Ansprüche, wobei der zweite Wulst oder Säulenwulst (40) auf der axial äußeren Seite der befestigten Karkasslageschicht (20) ist und wobei der zweite Kernreiter (52) einen im Wesentlichen dreieckig geformten Kernreiterabschnitt (52) und einen Lippenabschnitt (54) aufweist, der sich radial nach innen von dem im Wesentlichen dreieckig geformten Kernreiterabschnitt (52) erstreckt.

9. Reifen nach Anspruch 8, wobei der Lippenabschnitt (54) gegen den zweiten Wulst oder Säulenwulst (40) angeordnet ist und/oder sich entlang des zweiten Wulsts oder Säulenwulsts (40) erstreckt, vorzugsweise entlang der vollen radialen Höhe des zweiten Wulsts oder Säulenwulsts (40).

10. Reifen nach mindestens einem der vorhergehenden Ansprüche, wobei der erste Säulenwulst (30) einzelne Stahlwulstdrähte (70) umfasst oder daraus ausgebildet ist, vorzugsweise mit einem Drahtdurchmesser in einem Bereich von 0,89 mm bis 1,83 mm.

11. Reifen nach Anspruch 10, wobei die einzelnen Stahlwulstdrähte (70) eine Zugfestigkeit in dem Bereich von 2100 bis 2500 MPa aufweisen.

12. Reifen nach Anspruch 10 oder 11, wobei die einzelnen Stahlwulstdrähte (70) eine minimale prozentuale Reißlast von 5 %, vorzugsweise von 6 %, wie gemäß ASTM D4975 getestet, aufweisen.

13. Reifen nach mindestens einem der vorhergehenden Ansprüche, wobei der zweite Wulst oder Säulenwulst (40) Stahlkorde mit vielfachen Filamenten umfasst oder daraus ausgebildet ist, wobei die Filamente einen Durchmesser in einem Bereich von 0,28 mm bis 0,42 mm aufweisen.

14. Reifen nach mindestens einem der vorhergehenden Ansprüche, wobei der zweite Wulst oder Säulenwulst (40) Stahlkorde, die eine Zugfestigkeit unter 3500 MPa oder unter 3000 MPa aufweisen, umfasst oder daraus ausgebildet ist.

## Revendications

1. Bandage pneumatique possédant une bande de roulement, une couche de nappe de carcasse (20) qui possède une extrémité interne (22), dans la direction radiale, un premier talon sous la forme d'une colonne (30) et un deuxième talon ou un deuxième talon sous la forme d'une colonne (40) ; dans lequel l'extrémité interne (22), dans la direction radiale, de la couche de nappe (20) est fixée entre le premier talon (30) sous la forme d'une colonne et le deuxième talon ou le deuxième talon sous la forme d'une colonne (40) ; dans lequel le premier talon (30) sous la forme d'une colonne comprend ou est constitué par une première tringle de talon (70) ou une première tringle de bourrelet et le deuxième talon ou le deuxième talon sous la forme d'une colonne (40) comprend ou est constitué par une deuxième tringle de talon (80) ou une deuxième tringle de bourrelet ; **caractérisé en ce qu'**un élément choisi parmi la première tringle de talon ou la première tringle de bourrelet et la deuxième tringle de talon ou la deuxième tringle de bourrelet (70, 80) possède un allongement à 10 % de la charge de rupture, qui est supérieur à 0,2 %, lorsqu'on le mesure à partir d'une tringle ou d'un câblé que l'on a extrait à partir d'un bandage pneumatique qui a été vulcanisé, et l'autre élément respectif choisi parmi la première tringle de talon ou la première tringle de bourrelet et la deuxième tringle de talon ou la deuxième tringle de bourrelet (70, 80) possède un allongement à 10 % de la charge de rupture, qui est inférieur à 0,2 %, lorsqu'on le mesure à partir d'une tringle ou d'un câblé que l'on a extrait à partir d'un bandage pneumatique qui a été vulcanisé ; et **en ce que** le premier talon (30) sous la forme d'une colonne comprend ou est constitué d'un fil métallique en acier (70) et le deuxième talon ou le deuxième talon sous la forme d'une colonne (40) comprend ou est constitué par des câblés en acier (80) qui comprennent un certain nombre de filaments en aciers qui ont été torsadés les uns aux autres.

2. Bandage pneumatique selon la revendication 1, dans lequel un élément choisi parmi la première tringle de talon ou la première tringle de bourrelet et la deuxième tringle de talon ou la deuxième tringle de bourrelet (70, 80) possède un allongement à 10 % de la charge de rupture, qui est supérieur à 0,4 %, lorsqu'on le mesure à partir d'une tringle ou d'un câblé que l'on a extrait à partir d'un bandage pneumatique qui a été vulcanisé.

3. Bandage pneumatique selon la revendication 1 ou 2, dans lequel un élément choisi parmi la première tringle de talon ou la première tringle de bourrelet et la deuxième tringle de talon ou la deuxième tringle de bourrelet (70, 80) possède un allongement à 10 % de la charge de rupture, qui est inférieur à 0,15 % ou inférieur à 0,1 %, lorsqu'on le mesure à partir d'une tringle ou d'un câblé que l'on a extrait à partir d'un bandage pneumatique qui a été vulcanisé.

4. Bandage pneumatique selon au moins une des revendications précédentes, dans lequel le bandage pneumatique (10) possède une seule couche de nappe de carcasse (20).

5. Bandage pneumatique selon au moins une des revendications 1 à 3, dans lequel le bandage pneumatique (10) possède plus d'une couche de nappe de carcasse (20) ; dans lequel (i) au moins deux de ces couches de nappe de carcasse (20) sont fixées entre le premier talon (30) sous la forme d'une colonne et le deuxième talon ou le deuxième talon sous la forme d'une colonne (40) ; ou (ii) dans lequel une seule couche de nappe de carcasse (20) est fixée entre le premier talon (30) sous la forme d'une colonne et le deuxième talon ou le deuxième talon sous la forme d'une colonne (40).

6. Bandage pneumatique selon au moins une des revendications précédentes, dans lequel le premier talon (30) sous la forme d'une colonne est situé sur le côté interne, dans la direction axiale, de la couche fixée de nappe de carcasse (20) et la première tringle de talon (70) possède un allongement à 10 % de la charge de rupture qui est inférieur à 0,2 %, de préférence inférieur à 0,15 % ou inférieur à 0,1 %, lorsqu'on le mesure à partir d'un fil métallique que l'on a extrait d'un bandage pneumatique qui a été vulcanisé; et dans lequel le deuxième talon ou le deuxième talon sous la forme d'une colonne (40) est situé sur le côté externe, dans la direction axiale, de la couche fixée de nappe de carcasse (20) et la deuxième tringle de talon (80) possède un allongement à 10 % de la charge de rupture qui est supérieur à 0,2 %, de préférence supérieur à 0,4 % ou supérieur à 0,8 %, lorsqu'on le mesure à partir d'un câblé que l'on a extrait d'un bandage pneumatique qui a été vulcanisé.

7. Bandage pneumatique selon au moins une des revendications précédentes, qui englobe en outre un premier bourrage sur tringle (32) qui possède de préférence une configuration essentiellement en forme de triangle, qui est situé, dans la direction radiale, à l'extérieur du premier talon (30) sous la forme d'une colonne et/ou qui englobe en outre un deuxième bourrage sur tringle (52) qui possède de préférence une configuration essentiellement en forme de triangle, qui est situé, dans la direction radiale, à l'extérieur du deuxième talon ou du deuxième talon sous la forme d'une colonne (40).

8. Bandage pneumatique selon au moins une des revendications précédentes, dans lequel le deuxième talon ou le deuxième talon sous la forme d'une colonne (40) est situé sur le côté externe, dans la direction axiale, de la couche fixée de nappe de carcasse (20) ; et dans lequel le deuxième bourrage sur tringle (52) possède une portion faisant office de bourrage sur tringle (52) qui possède une configuration essentiellement en forme de triangle et une portion en forme de lèvre (54) qui s'étend, dans la direction radiale, à l'intérieur de la portion faisant office de bourrage sur tringle (52) qui possède une configuration essentiellement en forme de triangle.

9. Bandage pneumatique selon la revendication 8, dans lequel la portion (54) en forme de lèvre est disposée contre le deuxième talon ou le deuxième talon sous la forme d'une colonne (40) et/ou s'étend le long du deuxième talon ou du deuxième talon sous la forme d'une colonne (40), de préférence sur la totalité de la hauteur radiale du deuxième talon ou du deuxième talon sous la forme d'une colonne (40).

10. Bandage pneumatique selon au moins une des revendications précédentes, dans lequel le premier talon (30) sous la forme d'une colonne comprend ou est réalisé à partir de tringles de talons individuelles en acier (70), de préférence qui comprend un diamètre de tringle de talon qui se situe dans une plage allant de 0,89 mm à 1,83 mm.

11. Bandage pneumatique selon la revendication 10, dans lequel les tringles de talons individuelles en acier (70) possèdent une résistance à la traction qui se situe dans la plage allant de 2100 à 2500 MPa.

12. Bandage pneumatique selon la revendication 10 ou 11, dans lequel les tringles de talons individuelles en acier (70) possèdent un pourcentage minimal en ce qui concerne l'allongement à la rupture, à savoir de 5 %, de préférence de 6 %, lorsqu'on le calcule en conformité avec la norme ASTM D4975.

13. Bandage pneumatique selon au moins une des revendications précédentes, dans lequel le deuxième talon ou le deuxième talon sous la forme d'une colonne (40) comprend ou est réalisé à partir de câblés en acier qui comprennent de multiples filaments, les filaments en question possédant un diamètre qui se situe dans une plage allant de 0,28 mm à 0,42 mm.

14. Bandage pneumatique selon au moins une des revendications précédentes, dans lequel le deuxième talon ou le deuxième talon sous la forme d'une colonne (40) comprend ou est réalisé à partir de câblés en acier qui possèdent une résistance à la traction qui est inférieure à 3500 MPa ou qui est inférieure à 3000 MPa.
